# FASCICULE DE BREVET EUROPEEN

(11) **EP 2 915 463 B1**
(45) Date de publication et mention de la délivrance du brevet: **25.01.2017**
(21) Numéro de dépôt: 15157660.0
(22) Date de dépôt: 04.03.2015
(51) Int. Cl.: A47J 19/02

(54) **Dispositif de preparation d'aliments comportant une cheminée d'alimentation associée à une coupelle**
Vorrichtung zur Lebensmittelzubereitung, die einen mit einer Kapelle verbundenen Zuführschacht umfasst
Food-preparation device comprising a supply shaft associated with a cup

(30) Priorité: 07.03.2014 FR 1451906
(43) Date de publication de la demande: 09.09.2015
(73) Titulaire: SEB S.A., 69130 Ecully (FR)
(72) Inventeur: Lafond, Jean-Marie, 65420 Ibos (FR); Peyras, Lionel, 65100 Lourdes (FR)
(74) Mandataire: Cémeli, Eric Philippe Laurent

(56) Documents cités:
- CN-Y- 201 213 690
- FR-A1- 2 967 034
- KR-A- 20020 063 643

## Description

La présente invention concerne le domaine technique des dispositifs de préparation d'aliments comportant une cheminée d'alimentation recevant un poussoir pour pousser les aliments vers un outil de travail rotatif.

La présente invention concerne plus particulièrement les dispositifs de préparation d'aliments du type précité dans lesquels la cheminée d'alimentation est associée à une coupelle utilisée pour recueillir temporairement des aliments avant leur introduction dans la cheminée.

La présente invention concerne notamment, mais non exclusivement, les appareils électroménagers de préparation culinaire comportant un boîtier motorisé portant un accessoire amovible formant un dispositif de préparation d'aliments du type précité. La présente invention concerne également les accessoires amovibles du type précité.

La présente invention concerne notamment les dispositifs extracteurs de jus d'aliments tels que notamment les fruits ou les légumes. Lorsque le débit d"introduction d'aliments dans la cheminée est supérieur au débit d'extraction de jus du dispositif, le jus peut refluer dans la cheminée. Le mouvement du poussoir vers l'outil de travail rotatif peut favoriser des remontées incontrôlées de jus par la cheminée.

Il est connu du document KR20020063643 un appareil électroménager de préparation culinaire comportant une cheminée d'introduction des aliments portant une coupelle formant un plateau ou un entonnoir pour collecter les aliments à transformer et les diriger dans la cheminée à l'aide d'un poussoir vers un outil de travail rotatif présentant une partie défilant en regard du poussoir. Un inconvénient de la réalisation présentée dans ce document réside dans la position basse du poussoir qui peut être différente selon que la coupelle est utilisée ou non.

Un objet de la présente invention est de proposer un dispositif de préparation d'aliments comportant un outil de travail rotatif alimenté par une cheminée pouvant porter une coupelle, et un poussoir pour pousser les aliments introduits dans la cheminée vers l'outil de travail rotatif, dans lequel l'efficacité du poussoir reste identique avec ou sans coupelle.

Un autre objet de la présente invention est de proposer un dispositif de préparation d'aliments comportant un outil de travail rotatif alimenté par une cheminée pouvant porter une coupelle, et un poussoir pour pousser les aliments introduits dans la cheminée vers l'outil de travail rotatif, dans lequel une utilisation sans la coupelle n'augmente pas les risques de déformation ou d'endommagement de l'outil de travail rotatif par rapport à une utilisation avec coupelle.

Ces objets sont atteints avec un dispositif de préparation d'aliments comportant :
- une cheminée pour introduire les aliments à transformer,
- un outil de travail rotatif agencé en regard de la cheminée,
- un poussoir pouvant être déplacé dans la cheminée pour pousser les aliments vers l'outil de travail,
- une coupelle amovible présentant un exutoire débouchant dans la cheminée lorsque la coupelle est en place sur la cheminée,
du fait que le poussoir peut venir en butée sur un bord supérieur de la cheminée lorsque la coupelle est en place sur la cheminée. Ainsi le poussoir peut occuper la même position basse dans la cheminée indépendamment de l'utilisation ou non de la coupelle.

Avantageusement alors, la coupelle présente au moins une échancrure laissant apparaitre le bord supérieur de la cheminée lorsque la coupelle est en place sur la cheminée, le poussoir présentant au moins une protubérance inférieure prévue pour reposer sur le bord supérieur de la cheminée, la ou au moins l'une des protubérances inférieures étant engagée dans la ou l'une des échancrures de la coupelle en place sur la cheminée. En d'autres termes, lorsque la coupelle repose sur le bord supérieur de la cheminée, le poussoir engagé dans la cheminée peut également reposer sur le bord supérieur de la cheminée.

Avantageusement encore, la coupelle comporte une zone de collecte annulaire entourant l'exutoire. Cette disposition permet de faciliter le recueil des aliments versés dans la coupelle.

Avantageusement encore, la zone de collecte est déversante vers l'exutoire. Cette disposition permet de faciliter le recueil des jus dans la cheminée.

Avantageusement encore, la coupelle comporte un rebord supérieur périphérique. Cette disposition permet de faciliter la collecte des aliments disposés dans la coupelle. Cette disposition permet également d'éviter l'écoulement des jus par le bord de la coupelle.

Avantageusement encore, la coupelle comporte une nervure annulaire inférieure entourant l'exutoire. Cette disposition permet de faciliter le montage de la coupelle sur la cheminée.

Avantageusement alors, la coupelle comporte une bordure inférieure d'appui entourée par la nervure annulaire inférieure, la ou les échancrures étant ménagées dans la bordure inférieure d'appui. Cette disposition permet de simplifier la réalisation de la coupelle.

Avantageusement encore, la ou les échancrures débouchent dans l'exutoire. Cette disposition permet de simplifier la réalisation de la coupelle.

Avantageusement encore, le poussoir présente une face inférieure présentant au moins un organe de retenue agencé en regard de l'outil de travail. Cette disposition permet d'améliorer l'efficacité de transformation des aliments.

Selon une forme de réalisation, l'outil de travail rotatif comporte une extrémité d'entraînement et une paroi latérale présentant au moins un organe de travail externe défilant en regard de la cheminée, la paroi latérale étant issue de l'extrémité d'entraînement.

Alors, selon une forme de réalisation avantageuse, le dispositif de préparation d'aliments comporte un boîtier définissant un logement présentant une ouverture de montage pour la mise en place de l'outil de travail dans le logement, la cheminée débouchant dans le logement en regard de la paroi latérale de l'outil de travail. En alternative, le dispositif de préparation d'aliments peut notamment comporter un couvercle portant la cheminée, monté sur un récipient de travail, l'outil de travail étant agencé dans l'enceinte formée par le couvercle et le récipient de travail.

Aussi selon une forme de réalisation avantageuse, le ou l'un au moins des organes de travail externes est adjacent à un passage traversant et la paroi latérale présente une bordure circonférentielle ménageant une ouverture frontale pour l'évacuation des aliments transformés. Une telle réalisation permet de recueillir les aliments transformés à l'intérieur de l'outil de travail avant leur évacuation par l'ouverture frontale. Un outil de travail rotatif du type précité présente une rigidité limitée en comparaison avec une vis d'alimentation de hachoir ou de pressoir. Le poussoir proposé peut être utilisé avec ou sans la coupelle en limitant les risques de déformation ou d'endommagement de l'outil de travail rotatif.

Selon une forme de réalisation avantageuse, le boîtier porte un organe de transmission monté libre en rotation et l'extrémité d'entraînement de l'outil de travail monté dans le logement vient en prise avec l'organe de transmission pour entraîner en rotation l'outil de travail. Une telle forme de réalisation permet notamment de réaliser un accessoire amovible susceptible d'être assemblé avec une base motorisée.

Selon une forme de réalisation, le dispositif de préparation d'aliments comporte une base motorisée solidaire du boîtier et l'outil de travail monté dans le boîtier est entrainé par un moteur électrique disposé dans la base motorisée, si désiré par l'intermédiaire de l'organe de transmission. En alternative, l'organe de transmission peut notamment être remplacé par un arbre d'entraînement issu d'une motorisation portée par la base motorisée.

Avantageusement alors, le boîtier est monté amovible par rapport à la base motorisée.

L'invention sera mieux comprise à l'étude d'un exemple de réalisation et d'une variante, pris à titre nullement limitatif, illustrés dans les figures annexées, dans lesquelles :
- la figure 1 est une vue en élévation et en coupe d'un exemple de réalisation d'un appareil électroménager de préparation culinaire comportant un accessoire amovible, formant un dispositif de préparation d'aliments selon l'invention,
- la figure 2 est une vue en perspective assemblée de l'accessoire amovible illustré sur la figure 1, dans une configuration utilisant une coupelle,
- la figure 3 est une vue en perspective assemblée de l'accessoire amovible illustré sur la figure 1, dans une configuration n'utilisant pas de coupelle,
- la figure 4 est une vue en perspective de côté de l'accessoire amovible illustré sur la figure 1, dans une configuration n'utilisant pas de coupelle,
- la figure 5 est une vue en perspective de côté du poussoir et de l'outil de travail rotatif de l'accessoire amovible illustré sur la figure 1,
- la figure 6 est une vue en perspective de dessous du poussoir de l'accessoire amovible illustré sur la figure 1,
- la figure 7 est une vue en perspective de dessus du boîtier de l'accessoire amovible illustré sur la figure 1,
- la figure 8 est une vue en perspective de dessus de la coupelle de l'accessoire amovible illustré sur la figure 1,
- la figure 9 est une vue en perspective de dessous de la coupelle de l'accessoire amovible illustré sur la figure 1,
- la figure 10 est une vue en perspective de dessus de la coupelle en place sur le boîtier de l'accessoire amovible illustré sur la figure 1,
- la figure 11 est une vue en perspective de dessus d'une variante de réalisation du poussoir illustré sur les figures 5 et 6,
- la figure 12 est une vue en perspective de dessus d'une variante de réalisation de la coupelle illustré sur les figures 8 à 10,
- la figure 13 est une vue en perspective de dessus d'une variante de réalisation d'un boîtier utilisé avec le poussoir illustré sur la figure 11 et la coupelle illustrée sur la figure 12,
- la figure 14 est une vue en perspective de dessous de la coupelle illustrée sur la figure 12.

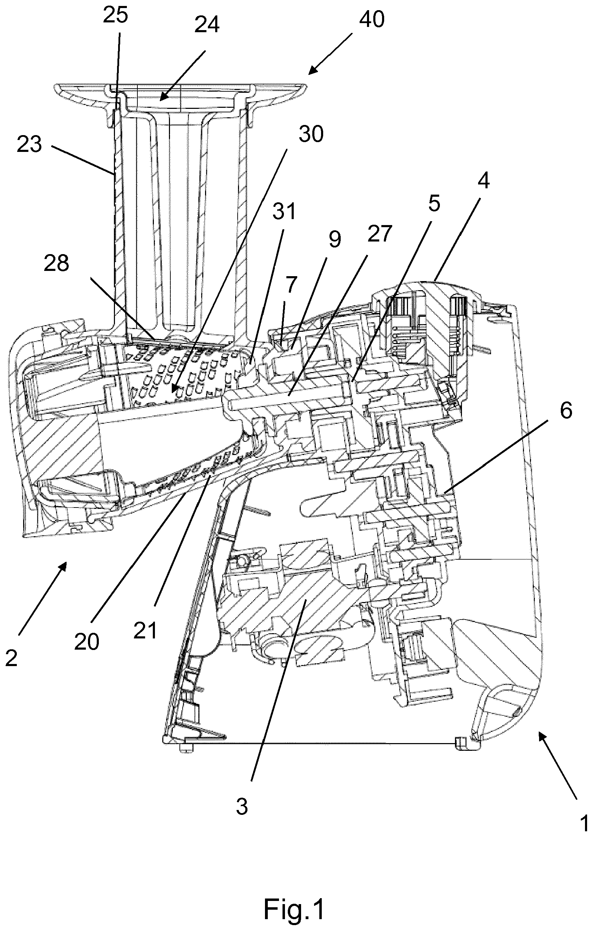

Les figures 1 à 10 illustrent un exemple de réalisation d'un dispositif de préparation d'aliments selon l'invention, comprenant une cheminée 23 pour introduire les aliments à transformer, un outil de travail 30 rotatif agencé en regard de la cheminée 23, un poussoir 24 pouvant être déplacé dans la cheminée 23 pour pousser les aliments vers l'outil de travail 30, et une coupelle 40 amovible. La cheminée 23 débouche en regard de l'outil de travail 30.

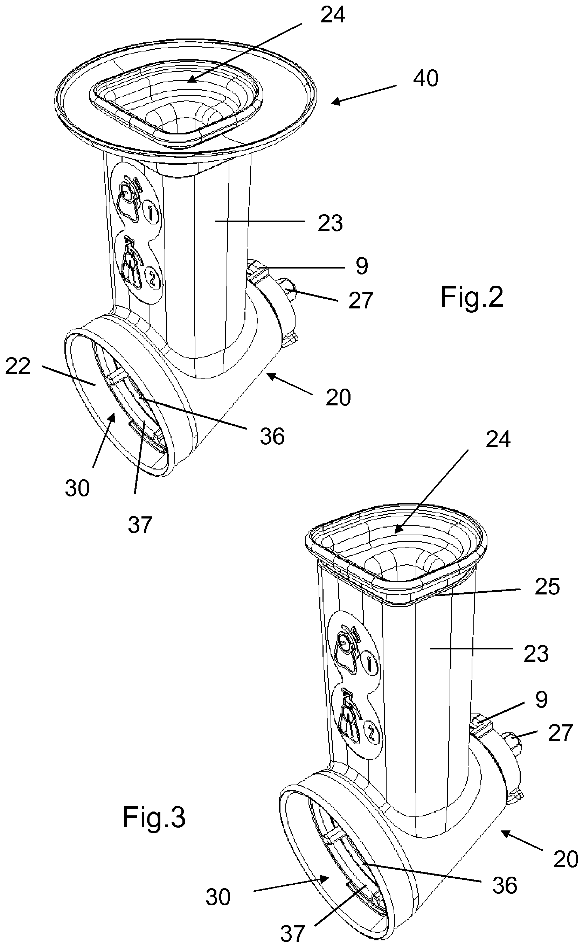

Le dispositif de préparation d'aliments peut être utilisé dans une configuration utilisant la coupelle 40, illustrée sur les figures 1, 2 et 10, ainsi que dans une autre configuration n'utilisant pas la coupelle, illustrée sur les figures 3, 4 et 7.

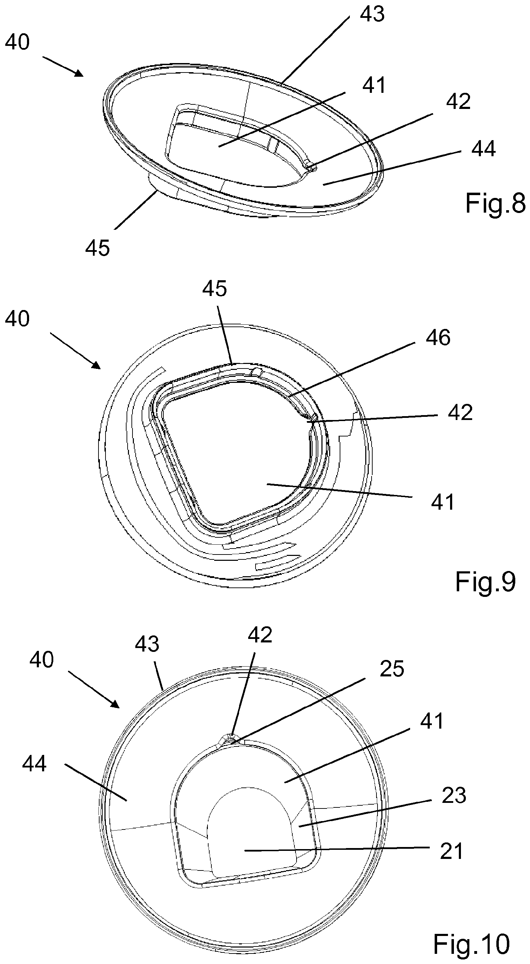

La coupelle 40 présente un exutoire 41, mieux visible sur les figures 8 à 10. L'exutoire 41 débouche dans la cheminée 23 lorsque la coupelle 40 est en place sur la cheminée 23, tel que visible sur la figure 10.

Le dispositif de préparation d'aliments représenté sur la figure 1 comporte une base motorisée 1 et un accessoire de travail 2 amovible comportant l'outil de travail 30 entraîné en rotation. La base motorisée 1 et l'accessoire de travail 2 forment un appareil électroménager de préparation culinaire.

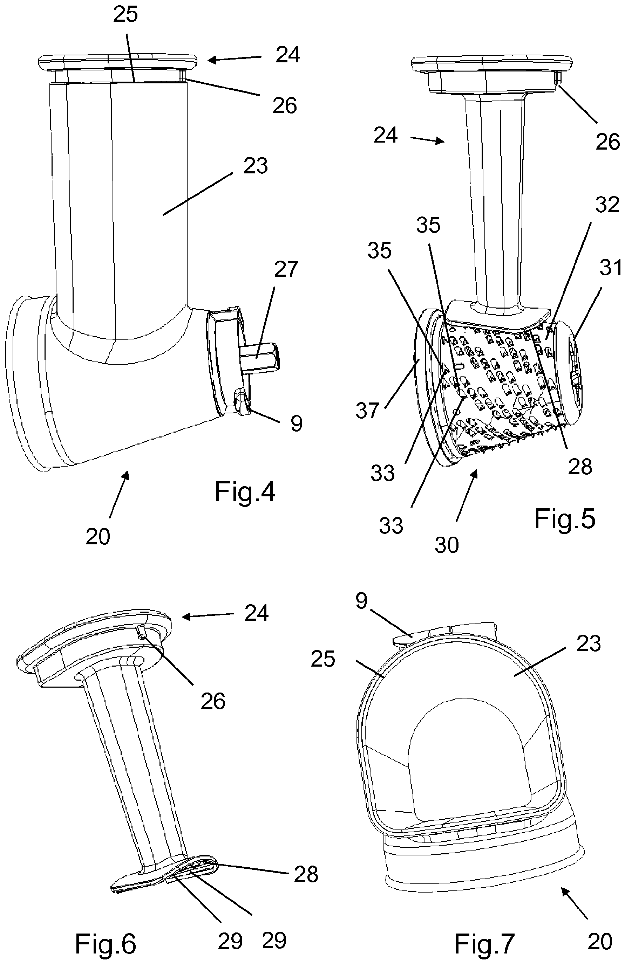

L'outil de travail 30 rotatif illustré sur les figures 1 et 5 comporte une extrémité d'entraînement 31 et une paroi latérale 32 présentant des organes de travail externes 33 défilant en regard de la cheminée 23. La paroi latérale 32 est issue de l'extrémité d'entraînement 31. Chacun des organes de travail externes 33 est adjacent à un passage traversant 35. La paroi latérale 32 présente une bordure circonférentielle 37 ménageant une ouverture frontale 36 pour l'évacuation des aliments transformés hors de l'outil de travail 30, tel que mieux visible sur les figures 2 et 3.

Dans l'exemple de réalisation illustré sur les figures, la paroi latérale 32 est circonférentielle et présente une géométrie tronconique. La paroi latérale 32 s'évase en direction de la bordure circonférentielle 37, pour faciliter l'évacuation des aliments transformés. A titre de variante, la paroi latérale 32 ne présente pas nécessairement une géométrie tronconique. La paroi latérale 32 peut notamment présenter une géométrie cylindrique ou une géométrie conique. La paroi latérale 32 peut notamment présenter aussi une géométrie plane.

Tel que visible sur la figure 1, la base motorisée 1 loge un moteur électrique 3 piloté par un dispositif de commande 4. Le moteur électrique 3 est relié à une sortie d'entrainement 5 si désiré par l'intermédiaire d'un dispositif de transmission 6. Le dispositif de transmission 6 peut comporter un réducteur. La vitesse de rotation de la sortie d'entraînement 5 peut être variable. De préférence, la vitesse de rotation de la sortie d'entraînement 5 se situe et/ou est incluse dans la plage de vitesses comprise entre 100 et 200 t/min.

L'accessoire de travail 2 peut être monté sur la base motorisée 1, tel que représenté sur la figure 1. L'accessoire de travail 2 est alors solidaire de la base motorisée 1. L'accessoire de travail 2 comporte à cet effet des moyens de fixation 9 prévus pour venir en prise avec des moyens de fixation complémentaires 7 de la base motorisée 1.

Dans l'exemple de réalisation illustré sur les figures, les moyens de fixation 9 et les moyens de fixation complémentaires 7 sont des moyens de fixation à baïonnette, tel que visible sur les figures 1 à 3. A titre de variante, d'autres moyens de fixation peuvent être utilisés, notamment une bague de verrouillage assemblée par vissage ou par baïonnette, ou encore des crochets de retenue.

Dans l'exemple de réalisation illustré sur les figures, le dispositif de préparation d'aliments comporte un boîtier 20 monté amovible par rapport à la base motorisée 1. Le boîtier 20 porte les moyens de fixation 9. Le boîtier 20 appartient à l'accessoire de travail 2.

Le boîtier 20 définit un logement 21 présentant une ouverture de montage 22 pour la mise en place de l'outil de travail 30 dans le logement 21. La cheminée 23 débouche dans le logement 21 en regard de la paroi latérale 32 de l'outil de travail 30.

Le boîtier 20 porte un organe de transmission 27 monté libre en rotation. L'extrémité d'entraînement 31 de l'outil de travail 30 monté dans le logement 21 vient en prise avec l'organe de transmission 27 pour entraîner en rotation l'outil de travail 30.

L'outil de travail 30 monté dans le boîtier 20 est entrainé par le moteur électrique 3 disposé dans la base motorisée 1 par l'intermédiaire de l'organe de transmission 27.

La coupelle 40 est montée amovible sur un bord supérieur 25 de la cheminée 23. La coupelle 40 peut former un plateau et/ou un entonnoir.

Le poussoir 24 peut venir en butée sur le bord supérieur 25 de la cheminée 23 lorsque la coupelle 40 n'est pas en place sur la cheminée 23, tel que visible sur la figure 4.

Le poussoir 24 peut venir en butée sur le bord supérieur 25 de la cheminée 23 lorsque la coupelle 40 est en place sur la cheminée 23, tel que visible sur la figure 1.

Dans l'exemple de réalisation illustré sur les figures 1 à 10, la coupelle 40 présente une échancrure 42 laissant apparaitre le bord supérieur 25 de la cheminée 23 lorsque la coupelle 40 est en place sur la cheminée 23, tel que visible sur la figure 10. Le poussoir 24 présente une protubérance inférieure 26, visible sur les figures 4 à 6. La protubérance inférieure 26 est prévue pour reposer sur le bord supérieur 25 de la cheminée 23, tel que visible sur la figure 4. La protubérance inférieure 26 est engagée dans l'échancrure 42 de la coupelle 40 en place sur la cheminée 23, tel que visible sur la figure 1.

De manière préférée, la coupelle 40 comporte une zone de collecte 44 annulaire entourant l'exutoire 41, tel que visible sur les figures 1, 2 et 8 à 10. La zone de collecte 44 est déversante vers l'exutoire 41. La coupelle 40 comporte un rebord supérieur périphérique 43 entourant la zone de collecte 44.

Tel que mieux visible sur la figure 9, la coupelle 40 comporte une nervure annulaire inférieure 45 entourant l'exutoire 41. La coupelle 40 comporte une bordure inférieure d'appui 46 prévue pour reposer sur le bord supérieur 25 de la cheminée, tel que visible sur la figure 1. La bordure inférieure d'appui 46 est entourée par la nervure annulaire inférieure 45. L'échancrure 42 est ménagée dans la bordure inférieure d'appui 46, tel que mieux visible sur la figure 9. L'échancrure 42 débouche dans l'exutoire 41.

Le poussoir 24 présente une face inférieure 28 présentant au moins un organe de retenue 29 agencé en regard de l'outil de travail 30. La face inférieure 28 du poussoir 24 prévue pour pousser les aliments vers l'outil de travail 30 est incurvée, tel que visible sur les figures 5 et 6, pour suivre le profil de la paroi latérale 32 de l'outil de travail 30. Le ou les organes de retenue 29 s'étendent longitudinalement par rapport à l'axe de rotation de l'outil de travail 30.

Le dispositif de préparation d'aliments illustré sur les figures 1 à 10 fonctionne et s'utilise de la manière suivante.

L'utilisateur monte le boîtier 20 sur la base motorisée 1 et met en place l'outil de travail 30 dans le logement 21 du boîtier 20. L'extrémité d'entraînement 31 de l'outil de travail 30 monté dans le logement 21 vient en prise avec l'organe de transmission 27 pour entraîner en rotation l'outil de travail 30. L'utilisateur peut mettre en place ou non la coupelle 40 sur la cheminée 23.

L'utilisateur peut mettre en marche le dispositif de préparation d'aliments en actionnant le dispositif de commande 4. L'outil de travail 30 agencé dans le logement 21 du boîtier 20 monté sur la base motorisée 1 est entraîné en rotation par l'organe de transmission 27. Ainsi l'outil de travail 30 monté dans le logement 21 est entrainé par le moteur électrique 3 par l'intermédiaire de l'organe de transmission 27. L'outil de travail 30 est de préférence entrainé à des vitesses de rotation comprises entre 100 et 200 t/min, pour obtenir un débit suffisant. Les organes de travail externes 33 défilent alors sous la base de la cheminée 23 et entament la base des aliments introduits dans la cheminée 23.

Lorsque la coupelle 40 n'est pas utilisée, la protubérance inférieure 26 du poussoir 24 peut reposer sur le bord supérieur 25 de la cheminée 23. Lorsque la coupelle 40 est utilisée, la protubérance inférieure 26 du poussoir 24 peut également reposer sur le bord supérieur 25 de la cheminée 23, au travers de l'échancrure 42. La face inférieure 28 du poussoir 24 peut ainsi occuper une même position en butée dans la cheminée 23 indépendamment de la présence ou de l'absence de la coupelle 40. La fragmentation des aliments par l'outil de travail 30 peut ainsi être optimisée pour obtenir un meilleur débit et/ou une meilleure qualité de transformation, sans risque d'endommager l'outil de travail 30 en autorisant une course du poussoir 24 trop importante et sans dégradation des performances de transformation des aliments due à une course du poussoir trop réduite.

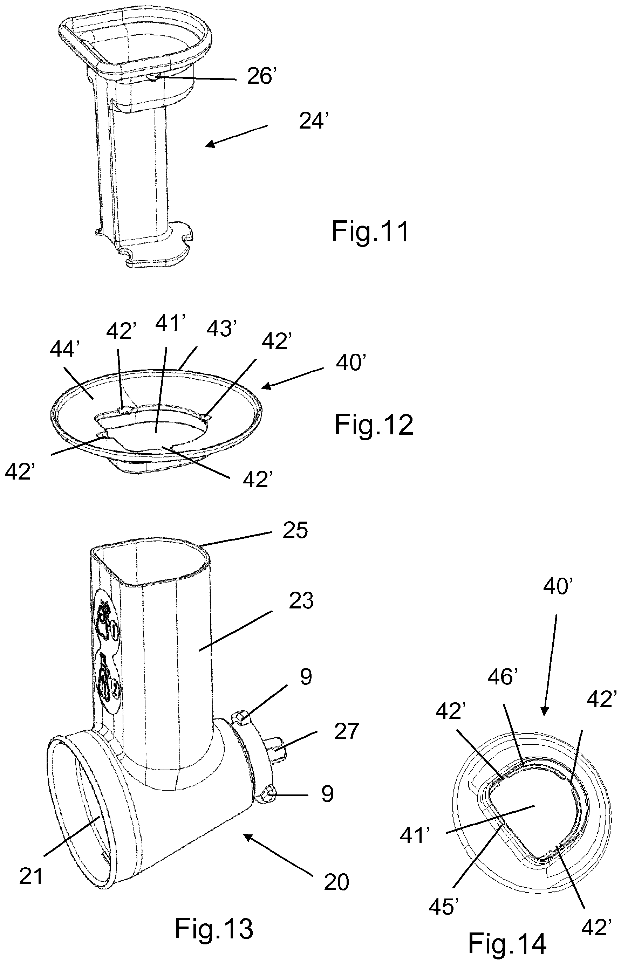

La variante de réalisation illustrée sur les figures 11 à 14 montre une coupelle 40' prévue pour être mise en place sur la cheminée 23. La coupelle 40' comporte une zone de collecte 44' annulaire entourant l'exutoire 41'. La zone de collecte 44' est déversante vers l'exutoire 41'. La coupelle 40' comporte un rebord supérieur périphérique 43' et une bordure inférieure d'appui 46' entourée par une nervure annulaire inférieure 45'.

La variante de réalisation illustrée sur les figures 11 à 14 diffère de l'exemple de réalisation illustré sur les figures 1 à 10 en ce que la coupelle 40' présente quatre échancrures 42' laissant apparaitre le bord supérieur 25 de la cheminée 23 lorsque la coupelle 40' est en place sur la cheminée 23, et en ce que le poussoir 24' présente quatre protubérances inférieures 26' prévues pour reposer sur le bord supérieur 25 de la cheminée 23. Les échancrures 42' sont ménagées dans la bordure inférieure d'appui 46' et débouchent dans l'exutoire 41'.

Ainsi, la coupelle 40 ; 40' peut présenter au moins une échancrure 42 ; 42' laissant apparaitre le bord supérieur 25 de la cheminée 23 lorsque la coupelle 40 ; 40' est en place sur la cheminée 23, et le poussoir 24 ; 24' peut présenter au moins une protubérance inférieure 26 ; 26' prévue pour reposer sur le bord supérieur 25 de la cheminée 23. La ou au moins l'une des protubérances inférieures 26 ; 26' du poussoir 24 ; 24' sont engagées dans la ou l'une des échancrures 42 ; 42' de la coupelle 40 ; 40' en place sur la cheminée 23.

A titre de variante, l'outil de travail 30 rotatif ne comporte pas nécessairement une paroi latérale 32 présentant au moins un organe de travail externe 33 adjacent à un passage traversant 35. L'outil de travail 30 rotatif peut notamment comporter un ou plusieurs organes de travail externes tels qu'un filet pour former une vis de pressage.

A titre de variante, la cheminée 23 ne débouche pas nécessairement dans un logement d'un boîtier. Le boîtier 20 ne définit pas nécessairement un logement 21 présentant une ouverture de montage 22 pour la mise en place de l'outil de travail 30 dans le logement 21. Le boîtier peut notamment comprendre un couvercle portant la cheminée, monté sur un récipient de travail, l'outil de travail étant agencé dans l'enceinte formée par le couvercle et le récipient de travail.

A titre de variante, le boîtier 20 ne comporte pas nécessairement un organe de transmission 27 agencé entre la base motorisée 1 et l'outil de travail 30. L'extrémité d'entraînement 31 de l'outil de travail 30 peut notamment être entraînée par la sortie d'entrainement 5 de la base motorisée 1.

A titre de variante, l'accessoire de travail 2 n'est pas nécessairement amovible par rapport à la base motorisée 1. Le boîtier 20 peut notamment être issu de la base motorisée 1.

La présente invention n'est nullement limitée aux exemples de réalisation décrits, mais englobe de nombreuses modifications dans le cadre des revendications.

## Revendications

1. Dispositif de préparation d'aliments comprenant :
- une cheminée (23) pour introduire les aliments à transformer,
- un outil de travail (30) rotatif agencé en regard de la cheminée (23),
- un poussoir (24 ; 24') pouvant être déplacé dans la cheminée (23) pour pousser les aliments vers l'outil de travail (30),
- une coupelle (40 ; 40') amovible présentant un exutoire (41 ; 41'), débouchant dans la cheminée (23) lorsque la coupelle (40 ; 40') est en place sur la cheminée (23),
**caractérisé en ce que** le poussoir (24 ; 24') peut venir en butée sur un bord supérieur (25) de la cheminée (23) lorsque la coupelle (40 ; 40') est en place sur la cheminée (23).

2. Dispositif de préparation d'aliments selon la revendication 1, **caractérisé en ce que** :
- la coupelle (40 ; 40') présente au moins une échancrure (42 ; 42') laissant apparaitre le bord supérieur (25) de la cheminée (23) lorsque la coupelle (40 ; 40') est en place sur la cheminée (23),
- le poussoir (24 ; 24') présente au moins une protubérance inférieure (26 ; 26') prévue pour reposer sur le bord supérieur (25) de la cheminée (23),
- la ou au moins l'une des protubérances inférieures (26 ; 26') étant engagée dans la ou l'une des échancrures (42 ; 42') de la coupelle (40 ; 40') en place sur la cheminée (23).

3. Dispositif de préparation d'aliments selon l'une des revendications 1 ou 2, **caractérisé en ce que** la coupelle (40 ; 40') comporte une zone de collecte (44 ; 44') annulaire entourant l'exutoire (41 ; 41').

4. Dispositif de préparation d'aliments selon la revendication 3, **caractérisé en ce que** la zone de collecte (44 ; 44') est déversante vers l'exutoire (41 ; 41').

5. Dispositif de préparation d'aliments selon l'une des revendications 1 à 4, **caractérisé en ce que** la coupelle (40 ; 40') comporte un rebord supérieur périphérique (43 ; 43').

6. Dispositif de préparation d'aliments selon l'une des revendications 1 à 5, **caractérisé en ce que** la coupelle (40 ; 40') comporte une nervure annulaire inférieure (45 ; 45') entourant l'exutoire (41 ; 41').

7. Dispositif de préparation d'aliments selon la revendication 6, **caractérisé en ce que** la coupelle (40 ; 40') comporte une bordure inférieure d'appui (46 ; 46') entourée par la nervure annulaire inférieure (45 ; 45'), la ou les échancrures (42 ; 42') étant ménagées dans la bordure inférieure d'appui (46 ; 46').

8. Dispositif de préparation d'aliments selon l'une des revendications 1 à 7, **caractérisé en ce que** la ou les échancrures (42 ; 42') débouchent dans l'exutoire (41 ; 41').

9. Dispositif de préparation d'aliments selon l'une des revendications 1 à 8, **caractérisé en ce que** le poussoir (24 ; 24') présente une face inférieure (28) présentant au moins un organe de retenue (29) agencé en regard de l'outil de travail (30).

10. Dispositif de préparation d'aliments selon l'une des revendications 1 à 9, **caractérisé en ce que** l'outil de travail (30) rotatif comporte une extrémité d'entraînement (31) et une paroi latérale (32) présentant au moins un organe de travail externe (33) défilant en regard de la cheminée (23), la paroi latérale (32) étant issue de l'extrémité d'entraînement (31).

11. Dispositif de préparation d'aliments selon la revendication 10, **caractérisé en ce qu'**il comporte un boîtier (20) définissant un logement (21) présentant une ouverture de montage (22) pour la mise en place de l'outil de travail (30) dans le logement (21) et **en ce que** la cheminée (23) débouche dans le logement (21) en regard de la paroi latérale (32) de l'outil de travail (30).

12. Dispositif de préparation d'aliments selon la revendication 11, **caractérisé en ce que** le ou l'un au moins des organes de travail externes (33) est adjacent à un passage traversant (35) et **en ce que** la paroi latérale (32) présente une bordure circonférentielle (37) ménageant une ouverture frontale (36) pour l'évacuation des aliments transformés.

13. Dispositif de préparation d'aliments selon l'une des revendications 11 ou 12, **caractérisé en ce que** le boîtier (20) porte un organe de transmission (27) monté libre en rotation et **en ce que** l'extrémité d'entraînement (31) de l'outil de travail (30) monté dans le logement (21) vient en prise avec l'organe de transmission (27) pour entraîner en rotation l'outil de travail (30).

14. Dispositif de préparation d'aliments selon l'une des revendications 11 à 13, **caractérisé en ce qu'**il comporte une base motorisée (1) solidaire du boîtier (20) et **en ce que** l'outil de travail (30) monté dans le boîtier (20) est entrainé par un moteur électrique (3) disposé dans la base motorisée (1), si désiré par l'intermédiaire de l'organe de transmission (27).

15. Dispositif de préparation d'aliments selon la revendication 14, **caractérisé en ce que** le boîtier (20) est monté amovible par rapport à la base motorisée (1).

## Patentansprüche

1. Vorrichtung zur Zubereitung von Lebensmitteln, die Folgendes umfasst:
- einen Einfüllstutzen (23) zum Einführen der zu verarbeitenden Lebensmittel,
- ein drehendes Arbeitswerkzeug (30), das gegenüber dem Einfüllstutzen (23) angeordnet ist,
- einen Stopfer (24; 24'), der im Einfüllstutzen (23) bewegt werden kann, um die Lebensmittel zum Arbeitswerkzeug (30) zu schieben,
- eine abnehmbare Schale (40; 40') mit einem Ablauf (41; 41'), der in den Einfüllstutzen (23) mündet, wenn sich die Schale (40; 40') auf dem Einfüllstutzen (23) befindet,
**dadurch gekennzeichnet, dass** der Stopfer (24; 24') auf einem oberen Rand (25) des Einfüllstutzens (23) zur Auflage kommen kann, wenn sich die Schale (40; 40') auf dem Einfüllstutzen (23) befindet.

2. Vorrichtung zur Zubereitung von Lebensmitteln nach Anspruch 1, **dadurch gekennzeichnet, dass**
- die Schale (40; 40') mindestens eine Aussparung (42; 42') aufweist, die den oberen Rand (25) des Einfüllstutzens (23) erkennen lässt, wenn sich die Schale (40; 40') auf dem Einfüllstutzen (23) befindet,
- der Stopfer (24; 24') mindestens einen unteren Vorsprung (26; 26') aufweist, der zur Auflage auf dem oberen Rand (25) des Einfüllstutzens (23) vorgesehen ist,
- der oder mindestens einer der unteren Vorsprünge (26; 26') in die oder eine der Aussparungen (42; 42') der auf den Einfüllstutzen (23) aufgesetzten Schale (40; 40') einrastet.

3. Vorrichtung zur Zubereitung von Lebensmitteln nach einem der Ansprüche 1 oder 2, **dadurch gekennzeichnet, dass** die Schale (40; 40') einen ringförmigen Sammelbereich (44; 44') umfasst, der den Ablauf (41; 41') umgibt.

4. Vorrichtung zur Zubereitung von Lebensmitteln nach Anspruch 3, **dadurch gekennzeichnet, dass** der Sammelbereich (44; 44') in Richtung des Ablaufs (41; 41') geneigt ist.

5. Vorrichtung zur Zubereitung von Lebensmitteln nach einem der Ansprüche 1 bis 4, **dadurch gekennzeichnet, dass** die Schale (40; 40') einen umlaufenden oberen Rand (43; 43') aufweist.

6. Vorrichtung zur Zubereitung von Lebensmitteln nach einem der Ansprüche 1 bis 5, **dadurch gekennzeichnet, dass** die Schale (40; 40') eine ringförmige untere Rippe (45; 45') aufweist, die den Ablauf (41; 41') umgibt.

7. Vorrichtung zur Zubereitung von Lebensmitteln nach Anspruch 6, **dadurch gekennzeichnet, dass** die Schale (40; 40') einen unteren Auflagerand (46; 46') aufweist, der von der ringförmigen unteren Rippe (45; 45') umgeben ist, wobei die Aussparung oder die Aussparungen (42; 42') in dem unteren Auflagerand (46; 46') ausgebildet ist bzw. sind.

8. Vorrichtung zur Zubereitung von Lebensmitteln nach einem der Ansprüche 1 bis 7, **dadurch gekennzeichnet, dass** die Aussparung oder die Aussparungen (42; 42') in den Ablauf (41; 41') mündet bzw. münden.

9. Vorrichtung zur Zubereitung von Lebensmitteln nach einem der Ansprüche 1 bis 8, **dadurch gekennzeichnet, dass** der Stopfer (24; 24') eine Unterseite (28) mit mindestens einem Halteelement (29) aufweist, das gegenüber dem Arbeitswerkzeug (30) angeordnet ist.

10. Vorrichtung zur Zubereitung von Lebensmitteln nach einem der Ansprüche 1 bis 9, **dadurch gekennzeichnet, dass** das drehende Arbeitswerkzeug (30) ein Antriebsende (31) und eine Seitenwand (32) mit mindestens einem außenliegenden Arbeitselement (33) aufweist, das gegenüber dem Einfüllstutzen (23) vorbeiläuft, wobei die Seitenwand (32) aus dem Antriebsende (31) hervorgeht.

11. Vorrichtung zur Zubereitung von Lebensmitteln nach Anspruch 10, **dadurch gekennzeichnet, dass** sie ein Gehäuse (20) umfasst, das eine Kammer (21) definiert, die eine Montageöffnung (22) zum Einsetzen des Arbeitswerkzeugs (30) in die Kammer (21) aufweist, und dass der Einfüllstutzen (23) in die Kammer (21) gegenüber der Seitenwand (32) des Arbeitswerkzeugs (30) mündet.

12. Vorrichtung zur Zubereitung von Lebensmitteln nach Anspruch 11, **dadurch gekennzeichnet, dass** das oder mindestens eines der außenliegenden Arbeitselemente (33) an einen Durchlass (35) angrenzt und dass die Seitenwand (32) einen umlaufenden Rand (37) aufweist, der eine vordere Öffnung (36) zur Ausgabe der verarbeiteten Lebensmittel bildet.

13. Vorrichtung zur Zubereitung von Lebensmitteln nach einem der Ansprüche 11 oder 12, **dadurch gekennzeichnet, dass** das Gehäuse (20) ein Getriebeelement (27) trägt, das frei drehbar montiert ist, und dass das Antriebsende (31) des in der Kammer (21) montierten Arbeitswerkzeugs (30) mit dem Getriebeelement (27) in Eingriff kommt, um das Arbeitswerkzeug (30) in Drehung zu versetzen.

14. Vorrichtung zur Zubereitung von Lebensmitteln nach einem der Ansprüche 11 bis 13, **dadurch gekennzeichnet, dass** sie eine fest mit dem Gehäuse (20) verbundene motorisierte Basis (1) aufweist und dass das in das Gehäuse (20) montierte Arbeitswerkzeug (30) durch einen in der motorisierten Basis (1) angeordneten Elektromotor (3) ggf. über das Getriebeelement (27) angetrieben wird.

15. Vorrichtung zur Zubereitung von Lebensmitteln nach Anspruch 14, **dadurch gekennzeichnet, dass** das Gehäuse (20) in Bezug auf die motorisierte Basis (1) abnehmbar montiert ist.

## Claims

1. Device for preparing foodstuffs comprising:
- a feeder tube (23) for introducing the foodstuffs to be processed,
- a rotary working tool (30) arranged opposite the feeder tube (23),
- a pusher (24; 24') which can be moved in the feeder tube (23) to push the foodstuffs towards the working tool (30),
- a removable cup (40; 40') with an outlet (41; 41'),
opening into the feeder tube (23) when the cup (40; 40') is in place on the feeder tube (23),
**characterised in that** the pusher (24; 24') can come up against an upper edge (25) of the feeder tube (23) when the cup (40; 40') is in place on the feeder tube (23).

2. Device for preparing foodstuffs according to claim 1, **characterised in that**:
- the cup (40; 40') has at least one notch (42; 42') revealing the upper edge (25) of the feeder tube (23) when the cup (40; 40') is in place on the feeder tube (23),
- the pusher (24; 24') has at least one lower protuberance (26; 26') intended to rest on the upper edge (25) of the feeder tube (23),
- the lower protuberance or at least one of the lower protuberances (26; 26') being engaged in the notch or one of the notches (42; 42') of the cup (40; 40') in place on the feeder tube (23).

3. Device for preparing foodstuffs according to claim 1 or 2, **characterised in that** the cup (40; 40') has an annular collection area (44; 44') surrounding the outlet (41; 41').

4. Device for preparing foodstuffs according to claim 3, **characterised in that** the collection area (44; 44') discharges into the outlet (41; 41').

5. Device for preparing foodstuffs according to one of claims 1 to 4, **characterised in that** the cup (40; 40') has a peripheral upper rim (43; 43').

6. Device for preparing foodstuffs according to one of claims 1 or 5, **characterised in that** the cup (40; 40') has a lower annular rib (45; 45') surrounding the outlet (41; 41').

7. Device for preparing foodstuffs according to claim 6, **characterised in that** the cup (40; 40') comprises a lower support edge (46; 46') surrounded by the lower annular rib (45; 45'), the one or more notches (42; 42') being formed in the lower support edge (46; 46').

8. Device for preparing foodstuffs according to one of claims 1 to 7, **characterised in that** the notch(es) (42; 42') open(s) into the outlet (41; 41').

9. Device for preparing foodstuffs according to one of claims 1 to 8, **characterised in that** the pusher (24; 24') has a lower side (28) having at least one retaining member (29) arranged opposite the working tool (30).

10. Device for preparing foodstuffs according to one of claims 1 to 9, **characterised in that** the rotary working tool (30) comprises a drive end (31) and a side wall (32) having at least one external working member (33) moving opposite the feeder tube (23), the side wall (32) coming from the drive end (31).

11. Device for preparing foodstuffs according to claim 10, **characterised in that** it comprises a box (20) defining a housing (21) having an assembly opening (22) to fit the working tool (30) in the housing (21) and **in that** the feeder tube (23) opens into the housing (21) opposite the side wall (32) of the working tool (30).

12. Device for preparing foodstuffs according to claim 11, **characterised in that** the external working member or at least one of the external working members (33) is adjacent to a crossing passage (35) and **in that** the side wall (32) has a circumferential edge (37) forming a front opening (36) to evacuate the processed foodstuffs.

13. Device for preparing foodstuffs according to claim 11 or 12, **characterised in that** the box (20) has a transmission member (27) mounted so as to rotate freely and **in that** the drive end (31) of the working tool (30) mounted in the housing (21) engages with the transmission member (27) for rotating the working tool (30).

14. Device for preparing foodstuffs according to one of claims 11 to 13, **characterised in that** it comprises a motorised base (1) integral with the box (20) and **in that** the working tool (30) mounted in the box (20) is driven by an electric motor (3) arranged in the motorised base (1), if desired via the transmission member (27).

15. Device for preparing foodstuffs according to claim 14, **characterised in that** the box (20) is removably mounted relative to the motorised base (1).
